# EUROPEAN PATENT APPLICATION

(11) **EP 2 202 358 A1**
(43) Date of publication of application: **30.06.2010**
(21) Application number: 08450203.8
(22) Date of filing: 29.12.2008
(51) Int. Cl.: D21H 21/36, B32B 29/00

(54) **Impregnated paper with antimicrobial properties**

(71) Applicant: Kompetenzzentrum Holz GmbH, 4021 Linz (AT)
(72) Inventor: Kandelbauer, Andreas, 9300 St. Veit an der Glan (AT); Widsten, Petri, 9300 St. Veith an der Glan (AT); Zikulnig-Rusch, Edith Martha, 9111 Haimburg (AT); Lammer, Herfield, 9300 St. Veith an der Glan (AT)
(74) Representative: Beer, Manfred

(57) **Abstract**

The invention relates to a resin-impregnated paper for application in decorative laminates with especially good hygienic surface properties where the biocidal additive is attached to the surface film.

## Description

**Background of the invention:** The present invention is related to a method for manufacturing an impregnated paper and a decorative laminate and to a decorative paper and a decorative laminate.

Papers impregnated with melamine-formaldehyde resin (MF-resin) are often used in the surface coating of particleboard or fibreboard for decorative and protective purposes. Melamine films are easy to clean, have excellent temperature and chemical resistance, and show high hardness and scratch resistance. Many different types of décor paper can readily be impregnated with MF resin.

MF films are widely employed for cabinets, desks, and floorings in intensely used environments such as hospitals and private kitchens where they may harbor harmful microorganisms. Aside from contagion through contaminated air and direct contact with infected people or animals, contaminated objects play an important role in the spread of infectious diseases. Faecal agents from infectious diseases of the intestinal tract are easily spread from sanitary installations to kitchen environments through toilet articles, cleaning equipment, and hands. Contamination easily spreads from fingers to melamine resin surfaces and, directly or indirectly (e.g., through contaminated cutlery), further to foodstuffs. Normal cleaning practices are mostly insufficient for elimination of bacterial or viral contaminants such as salmonellas, campylobacteria, Escherichia coli, or noroviruses (Mattick et al. Int. J. Food Microbiol. 85 (2003) 213). Barker and co-workers (J. Hosp. Infect. 58 (2004) 42) found up to 28% of the original contaminants to survive a visually thorough cleaning with detergents and disinfectants of melamine surfaces contaminated by noroviruses. The hygienic properties of material surfaces in terms of biocidal performance are therefore extremely important, especially in areas of use with increased risk of infection such as hospitals, kitchens, or sanitary interiors.

Generally, the surfaces of press-coated boards show considerably better hygienic properties than those of uncoated wood materials. This is mainly attributable to the better cleanability of smooth melamine films. However, such surfaces cannot be considered to be antibacterial since they do not inhibit growth of microorganisms or kill adhering cultures of microbes. In order to achieve antimicrobial performance, melamine resin films need to be provided with antibacterial compounds.

So far, approaches to conferring antimicrobial properties to MF have involved mainly low-molecular weight additives. A large number of different substances have been described in the patent literature, including quaternary ammonium salts, phosphonium salts, protoporphyrine-based sulfonium salts, various types of antibiotics, chlorophenyl derivatives, biomimetic polyamides, arylsulfonyl alkenenitrile, aminobenzylsulfonyl acrylamides and others. WO 99/08527, for example, discloses compositions containing 2,3,5,6-tetrachloro-4-methylsulfonylpyridine for treating textile and plastic antimicrobial finishes.

Antimicrobial melamine resin and products containing diiodomethyl-p-toluenesulfone, zinc and sodium pyrithione, azoles, polyhexamethylene biguanide hydrochloride, or 3,4,4'-trichlorocarbanilide are discussed in US 2006/166024. The Japanese patent application JP10119221 mentions a melamine resin decorative sheet having antifungal properties where peroxides are added to the resin. An additional problem with this method, besides additive leaking, is that too high concentrations of peroxide reduce the shelf-life of melamine resin because of its acid catalytic effect on resin cross-linking. In US2004/0043686, antimicrobial sheeting articles are described that contain phenolic compounds with antimicrobial effects. Examples of phenolic compounds include organic acids such as benzoic acid and its derivatives, halogenated phenols, or hydroxytoluene. The use of antibacterial mixtures of phosphates with silver, benzyl alcohol, cetyl pyridine, or isopropyl methyl phenols was reported in the patent application WO03/009827. WO 03/045143 discloses antimicrobial compositions for melamine resins based on pyrithione or an iodine-containing antimicrobial formulation.

W02004/004456 describes antimicrobial concentrates for melamine resins based on 2,4,4'-trichloro-2'-hydroxydiphenyl ether (triclosan). Triclosan is one of the most frequently used substances for imparting antimicrobial properties. It is, for example, mentioned in WO 03/009827 and W02003/045143 as an additive for antimicrobial melamine resin and products made therefrom. Triclosan has been incorporated into countertops in an attempt to provide a surface exhibiting long-lasting antimicrobial properties. For example, an antimicrobial melamine resin and products thereof are disclosed in US2006166024. Besides other compounds, triclosan is described as a very strong antimicrobial agent. Also a combination of triclosan and ortho-phenylphenol is described as very effective in melamine resins. Triclosan and a number of other additives are described in WO 03/009827.

The problem with triclosan and all aforementioned low-molecular weight additives is that they are potentially toxic upon leaching out during their end-use. The negative health and environmental effects of chemicals such as triclosan render them unsuitable for many applications. Furthermore, microorganisms can develop resistance to organic compounds. Moreover, the antimicrobial effects decline over time as triclosan leaches out from the substrate surface. In addition, triclosan is believed to cause skin irritation and to generate dioxin when burned, creating disposal problems.

The increasing health concerns related to low-molecular weight organic compounds have given rise to research on the applicability of metal ions and particles such as silver (Kim and Kim, Int. Biodeter. Biodegrad. 57 (2006), p. 155 and Kim et al., Nanomedicine 3 (2007), p. 95) in antimicrobial products. The authors describe the application of colloidal silver nitrate (AgNO₃) and silver nanoparticles to the manufacture of melamine laminates. The addition of AgNO₃ to the melamine resin used for impregnation of overlay papers gave laminates with superior antibacterial properties compared to those made without AgNO₃. However, not all microorganisms responded equally well to silver. While yeasts and Gram-negative bacteria such as E. coli were effectively eliminated, the effect on the Gram-positive S. aureus was less pronounced. Moreover, the effectiveness of the metal additive depends on its diffusion to the surface.

In WO03/015833, other nanoparticles such as titanium dioxide (TiO₂) have been incorporated into surface coating materials that show photocatalytic activity. Such particles are photosensitive and facilitate the UV light-induced destruction of microbes. The photocatalytical effect of such nanoparticles, when appropriately doped with traces of metals can be triggered by different light sources so that the antimicrobial properties in principal can be switched on and off at convenience.

However, the drawbacks of photocatalysis are manifold. There are no established technologies in the market for the application of photocatalytic TiO₂ in laminate coating resins. In WO03/015833, photosensitizers were applied onto paper surface using an applicator roll or added to a water-based buffer solution applied by spraying to avoid unduly high bulk concentrations. This comprises another coating step in addition to the conventional paper coating process.

Furthermore, to be effective, the technology requires that sufficient light be provided and that molecular be available. With pure TiO₂ films, normal ambient light conditions together with a convective air supply are sufficient to produce a photocatalytic effect. In contrast, the effectiveness of low concentrations of agents embedded in a resin matrix towards microbes adhering to the surface remains to be shown.

The incorporation of TiO₂ into melamine resin gives a coating matrix with a high nanoparticle content. This poses the risk of TiO₂-catalyzed self-destruction of coating films. Since melamine resin is also susceptible to photodegradation in the presence of sensitizers, direct contact between catalyst and resin is bound to result in autocatalytic resin destruction.

A further major drawback of nanoparticles is their still unclear effect on health: the possibility that nanoparticles may have adverse health effects in humans has not yet been ruled out.

Thus, the major disadvantage of low-molecular weight antimicrobial additives is directly related to their mode of action: to be effective, the agent must be ingested by the microorganism. This means that the agent must diffuse to the surface and occur mostly in dissolved form to be ingested. However, agents diffused to the surface can be leached out and the surface will ultimately suffer a total loss of antimicrobial properties. Typically, leaching is accelerated when washing solutions are applied to clean the surfaces. Leaching is a problem that cannot be avoided with the state-of-the-art in decorative laminates since leachability is a prerequisite for the antimicrobial agent to act effectively on the microorganisms.

Leached-out agents can find their way into foodstuffs. Although low-molecular weight antimicrobial additives are ideally non-toxic to humans because of their often specific effect on bacterial cell walls, some may still exhibit harmful effects on human health. Pyridinium compounds, for example, can cause allergic reactions. Perhaps the most controversial antimicrobial agent is triclosan, a commonly used bacterial growth inhibitor linked to cancer and developmental disorders as well as eco-toxicological damages.

Another drawback of the addition of low-molecular weight antimicrobials is that chemical aids are often required to enable reasonable processability during manufacturing of the impregnated papers. This increases the content of potentially harmful chemicals in the surface. In order to be processable, antimicrobial additives for melamine-based impregnation and coating resins must form a homogenous aqueous dispersion. They must not precipitate or agglomerate; that would lead to surface defects in the final laminate. Therefore, additional chemicals are often necessary to suppress undesired phase separation. Ethoxylated tensides are often used to improve homogeneity. Typically, poly(ethyleneoxy) nonylphenylether phosphates with different degrees of ethoxylation are currently used for this purpose; this type of compounds themselves are of ecotoxicological concern.

Another disadvantage associated with the addition of low-molecular weight compounds is that when they are simply added to the impregnation resin, the active ingredients are not only present on the surface where they are needed but they are also dispersed in the bulk of the material. This means that most of the additive is not available to microbial metabolism and is hence wasted.

Yet another drawback concerns the product properties of the melamine films. Cured melamine resin is transparent and has no intrinsic color, allowing the manufacture of highly brilliant and even high-gloss laminates with a wide range of décor types. A special requirement for antimicrobial additives for melamine resins is thus optical neutrality: colored additives in the overlay or impregnated décor papers would negatively impact the visual appearance of the décor paper. However, many of the compounds described in the literature exhibit strong color and are therefore unusable. In addition, it is quite common that additives such as antimicrobials interact with other components of the impregnation solution, causing unexpected surface defects like cloudiness, cords, holes, stains, or agglomeration.

The major drawbacks of the state-of-the-art in conferring antimicrobial properties to melamine film surfaces by the use of low-molecular weight substances can thus be summarized as follows:
(1) unavoidable leaching out of the active agent that causes the surface to lose its antimicrobial properties, (2) potential migration of leached agents to foodstuffs increases the risk of human exposure to these chemicals, (3) potential toxicity of the used antimicrobials to humans, (4) additional loading of films with aiding chemicals that themselves may be harmful, (5) unproportionally high amounts of microbial agent in the bulk of the material where it is ineffective, (6) antimicrobial agents may cause undesired opaqueness or color change of the melamine films, (7) some additives such as peroxy acids or photocatalytically active nanoparticles may even attack the melamine network and destroy the coating film.

### Object of the invention:

Main object of the invention is to provide an impregnated paper and a laminate that does not have the drawbacks refered to above.

### Summary of the invention:

The invention achieves the above object by a method and a (decorative) laminate as defined in the claims.

The disclosed invention circumvents the above mentioned problems. The invention concerns an immobilized chemical agent that (1) does not leach from the melamine film, leaving the melamine film eventually without antimicrobial properties, (2) does not migrate to foodstuffs and is thus of no concern to humans as a potential contact poison, (3) does not require chemical additives for the impregnation resin, (4) is restricted to the surface and does therefore not lead to unnecessarily high amounts of agent in the bulk of the laminate, (5) does not impede the desired high optical brilliance of the surface and (6) the antimicrobial functionality does not destroy the chemical integrity of the surface film.

The disclosed invention comprises (1) an antimicrobial additive that is chemically attached to an impregnated laminating paper, (2) the laminating paper which in most cases will be either an overlay or a decorative paper sheet, and (3) an appropriate paper coating resin which may or may not contain filler materials such as lignocellulosic fibers and is usually based on a melamine-formaldehyde resin. It is understood that the antimicrobial agent is immobilized either directly on the paper surface, in the paper coating resin, or in a filler material such as fiber-based material embedded in the coating resin.

In a preferred embodiment of the invention, the antimicrobial agent is chemically bound to the surface of the laminating paper and is not dispersed in the bulk of the laminate. The antimicrobial agent consists at least of two structural entities, one of which is an anchor group immobilizing the compound in the laminating paper, while the other bears an antimicrobially active atom, ion, or molecule.

In another preferred embodiment of the invention, the antimicrobial effect of the antimicrobial agent immobilized in the laminating paper is based on a reversible chemical reaction which liberates a biocidal or antimicrobially active atom, ion, or molecule which is readily absorbed by adhering microbes, killing them off.

In a further preferred embodiment of the invention, the reversible chemical reaction resulting in an antimicrobial effect on the surface of the laminating paper is used to regenerate the antimicrobial effect by treating the surface with a regenerating solution. Upon application of such a regenerating solution on the surface of the laminate surface, the functional groups of the microbiocidal atom, ion, or molecule are replenished and the antimicrobial effect of the agent is regenerated.

Since the antimicrobially active component is chemically attached to the melamine resin surface, the decorative or protective paper surface, or the filler fibers dispersed in the top coat, no leaching of active compound is observed and the antimicrobial effect is preserved over long periods of time.

Since the active ingredient is immobilized, its migration to foodstuff or other materials or objects is impossible and harmful effects on humans are excluded.

Since the chemical is linked to a solid surface matrix, no dispersing agents or other chemical aids are required in the present invention.

A further advantage of the disclosed invention lies in the mechanical stability of the antimicrobial laminate. Due to the sound attachment of the chemical additive, the antimicrobial agent is not removed by mechanical abrasion. Such mechanical resistance is a very important feature particularly when the antimicrobial paper and laminates made thereof are used for kitchen work surfaces and flooring materials where especially high mechanical abrasion resistance is required.

Moreover, the present invention constitutes an improvement over the state-of-the-art in that the active agent is limited to the top surface layer of the material and no antimicrobial agent is present in the bulk material of the laminate. Since the agent is attached to the surface, the major fraction of the active ingredient is available for antimicrobial action and no material is wasted in the bulk of the laminate. This reduces raw material costs and potential problems upon disposal of used material by keeping the applied amounts of antimicrobial at a minimum.

Another advantage of the present invention is that the antimicrobial additive does not cause any optical disturbances in the final product and the optical transparency of the coating and/or the impregnated overlay paper is not impaired, resulting in a visually highly brilliant décor layer which is not affected by the additive. Since the antimicrobial additive is covalently linked to the coating resin matrix, the filler fibers, or the overlay paper, its coagulation, agglomeration or aggregation leading to undesired stains, cords, clouds, or other optical defects is prevented. In addition, in an especially preferred embodiment of the invention where the antimicrobial additive is a melamine-based chemical covalently linked to the melamine-formaldehyde resin, the antimicrobial agent has exactly the same refractive index as the resin matrix so that the occurrence of opaque defects due to refraction of light is virtually impossible.

### Detailed description of the invention:

In the following, a few embodiments of the invention are described. However, these are given to illustrate the principle of the invention and it is understood that the invention is not limited to the given examples.

In the following description reference is made to the schematic drawings, in which
Fig. 1a and b show a laminate according to the invention,
Fig. 2a and b show an embodiment where an antimicrobial agent is bonded to cellulose fibers,
Fig. 3a and b show another embodiment of a laminate according to the invention
   and
Fig. 4a and b show a further embodiment.

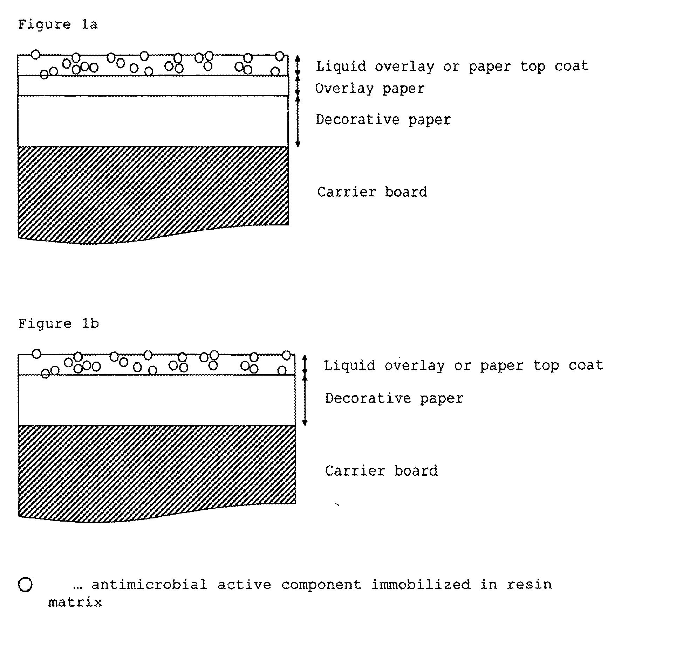

In one embodiment of the present invention, the antimicrobial is covalently linked to the melamine-formaldehyde resin used for paper coating. In a preferred embodiment of the invention, the coating containing the antimicrobial is applied as a top upper layer during the roller coating of wetted and core-impregnated, partly pre-dried paper. In an even more preferred embodiment of the invention, the coating containing the antimicrobial is applied in a separate top coating step after the roller coating of the impregnated paper using a separate coating device. The principal architecture of a typical laminate composite obtained with the invention in this embodiment is illustrated in Figure 1. The top coat resin layer may be applied either onto a protective paper (Figure 1a) or onto a decorative paper (Figure 1b). The resin coating may contain, for example, corundum as a mechanical reinforcement and may be applied according to the so-called liquid overlay process although other applicators such as roller coaters may as well be used.

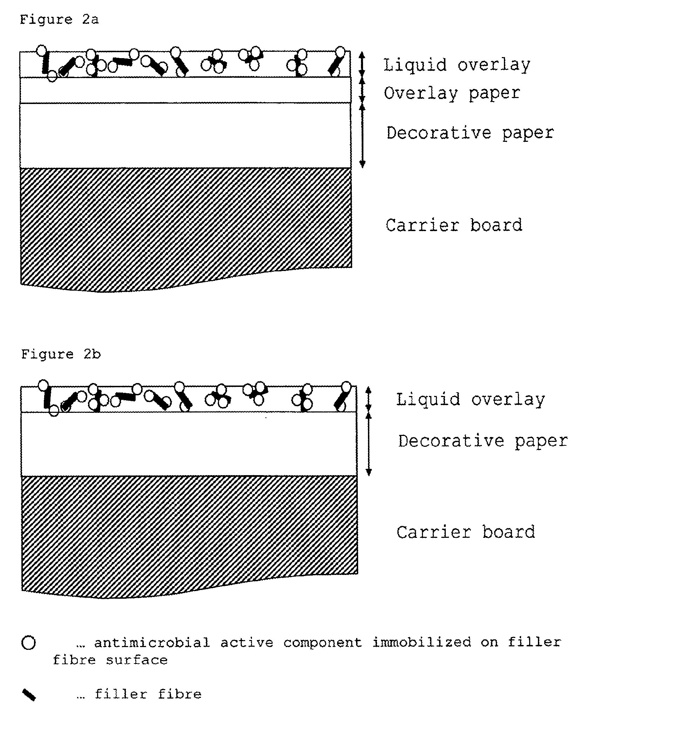

In a further embodiment of the invention, the antimicrobial agent is covalently linked to cellulose fibers. This is illustrated in Figure 2 (a and b). The cellulose fibers are added to the coating resin, e.g., a typical melamine-formaldehyde coating resin, and homogenously dispersed. The fiber slurry, containing the covalently immobilized antimicrobial compounds, is applied as a top coating onto the wetted, core-impregnated and partly pre-dried paper. Again, the resin containing the antimicrobially surface-modified fibers may be applied to a protective sheet like an overlay paper as in the liquid overlay process (Figure 2a)or directly to a decorative paper (Figure 2b).

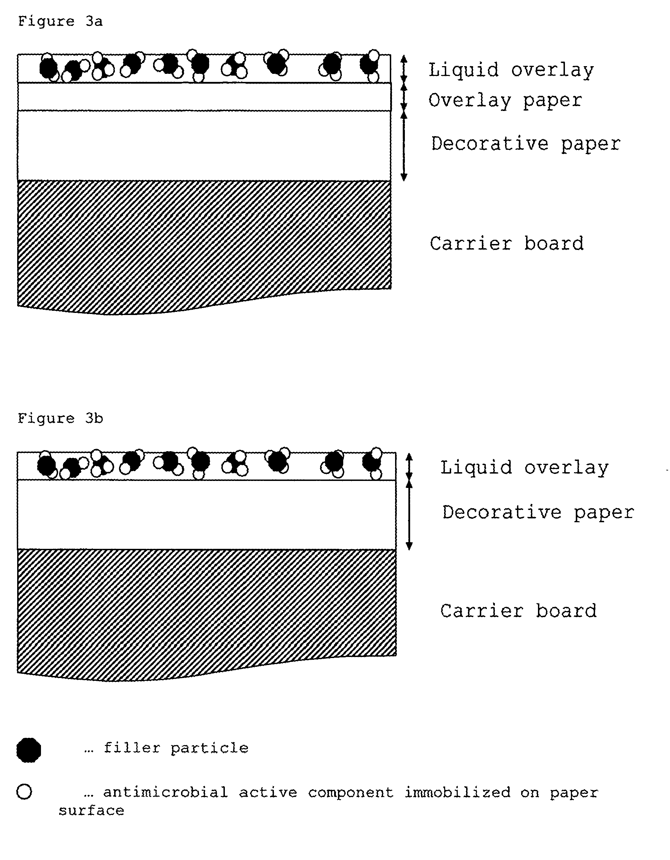

In another embodiment of the invention, the antimicrobial agent is covalently linked to an inorganic filler material such as an abrasive material like, for example, corundum or silicium carbide, or a pigment like, for example, titanium dioxide (Fig. 3a and 3b). To facilitate covalent immobilization of the antimicrobial agent on the inorganic filler, the inorganic filler may be surface treated with an adhesion promoter like, for example, an alkoxysilane based compound prior to antimicrobial agent immobilization. The surface treated, antimicrobially modified inorganic filler is dispersed in a coating resin and applied as a top coat by for example a liquid overlay process (Fig. 3a) or directly applied onto the décor paper surface.

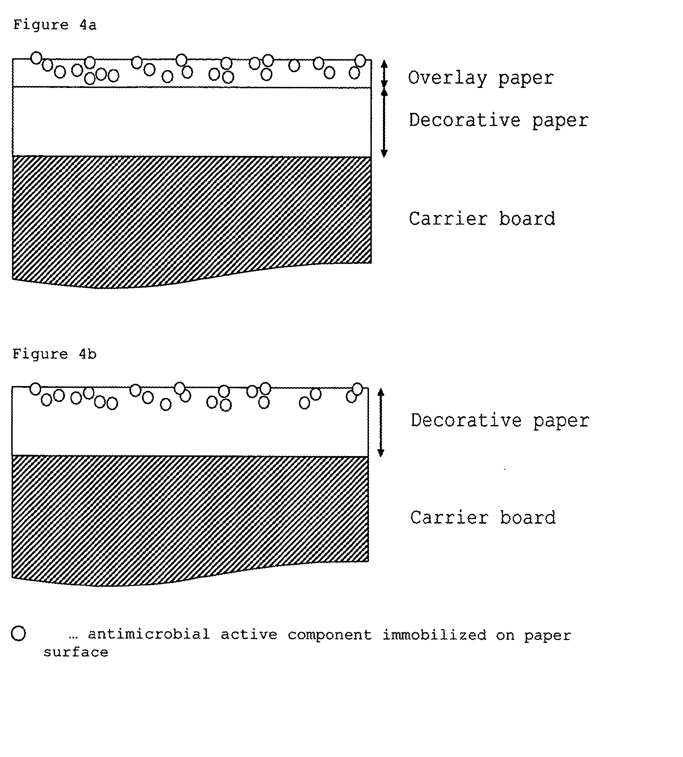

In yet another embodiment of the invention, the antimicrobially active agent is covalently linked to an overlay paper prior to or during impregnation. The impregnated antimicrobial overlay paper is used as the transparent top upper surface layer in a decorative laminate (Figure 4a).

In yet another embodiment of the invention, the antimicrobial additive is immobilized covalently onto the surface of a decorative paper (Figure 4b).

In other embodiments of the invention combinations of the aforementioned embodiments of the invention are used. For example, antimicrobially modified cellulosic fibres may be dispersed in a melamine formaldehyde resin that contains covalently immobilized antimicrobial agent. Thereby, surfaces of especially high antimicrobial activity can be manufactured.

With regard to the nature of the antimicrobial compound, a wide range of antimicrobially active substances can be used for the purposes of the present invention. For example, any of the aforementioned compounds, provided that they contain reactive or polymerizable functional groups, may be used and are herewith incorporated into the present invention, the invention thereby not being limited to the above-mentioned compounds.

In a preferred embodiment of the invention, the antimicrobial agent consists of at least two structural units, one of which is a reactive anchor molecule providing the chemical attachment to the matrix, while the other one is the actual antimicrobial ingredient. For example, in such a preferred embodiment of the invention, the antimicrobially active compound may be a heterocyclic chemical such as a hydantoin-based or a melamine-based compound containing reactive groups such as chlorine or other halogens. In such a compound, the basic heterocyclic structure serves as a chemical anchor group which is covalently linked to either cellulose or melamine resin and the substituent carrying the antimicrobial functionality.

In an especially preferred embodiment of the present invention, the antimicrobially active component is regenerated by using a washing liquid during use. Such a washing solution contains at least the antimicrobially active atom, ion, or molecule, a pH regulating agent such as an acid or a base, and is preferably water-based. It is applied during cleaning of the laminated surface and restores the functionality of the antimicrobial component attached to the laminate. It is of special convenience if the washing solution contains other components such as fragrances, soap, or other functional ingredients which are typically included in washing solutions for cleaning interior flooring, furniture or kitchen working surfaces.

### Examples:

Liquid overlay process: laminating paper is modified with antimicrobial agent, impregnated with melamine resin, dried coated with corundum containing MF, and pressed on a board with the antimicrobial

### Example 1

An overlay paper is impregnated with a melamine-formaldehyde resin which is chemically modified with the antimicrobial agent and coated on its surface using the liquid overlay process. The paper is laminated onto the surface of a particleboard. The resulting low-pressure melamine laminate shows improved antibacterial properties. After several treatments with aqueous solutions of various pH, no leaching of the antimicrobial is observed. The antimicrobial effect of the laminate is not diminished by rinsing with washing solutions. The surface is easy to clean and growth of bacteria is inhibited.

### Example 2

An overlay paper is treated with a solution of antimicrobial reagent. The antimicrobial reagent is covalently linked to the cellulosic fibres of the α-cellulosic fiber-based paper. Subsequently, the treated paper is impregnated with MF paper and coated with melamine resin containing corundum. The treated, impregnated and coated overlay paper is pressed on a particleboard as the top layer of a stack consisting of 1) balance sheet, 2) particleboard, 3) decorative paper, and 4) overlay paper. The resulting decorative laminate shows improved antibacterial properties. After several treatments with aqueous solutions of various pH, no leaching of the antimicrobial is observed. The antimicrobial effect of the laminate is not diminished by rinsing with washing solutions. The surface is easy to clean and growth of bacteria is totally inhibited.

### Example 3

Cellulosic fibres are modified with antimicrobially active agent and dispersed homogeneously in melamine resin. The resin containing modified filler fibres is used to impregnate and coat decorative paper. Subsequently, the impregnated and coated paper is pressed onto the surface of a particleboard. The resulting decorative laminate shows improved antibacterial properties. After several treatments with aqueous solutions of various pH, no leaching of the antimicrobial is observed. The antimicrobial effect of the laminate is not diminished by rinsing with washing solutions. The surface is easy to clean and growth of bacteria is totally inhibited.

### Example 4

Melamine formaldehyde resin is covalently modified with antimicrobial reagent. Corundum particles are surface treated with an alkoxysilane carrying an antimicrobial substituent. The surface-treated corundum is added to the modified melamine resin and the homogenous dispersion is applied to coat the surface of an overlaypaper. The coated overlay paper is pressed onto particleboard as the top layer of a stack consisting of 1) balance sheet, 2) particleboard, 3) decorative paper, and 4) overlay paper. The resulting decorative laminate shows improved antibacterial properties.

## Claims

1. An impregnated paper and a decorative laminate containing an antimicrobially active chemical component, **characterized in that** the antimicrobially active component being immobilized in the surface of the laminating paper

2. An impregnated paper and a decorative laminate according to claim 1), wherein the antimicrobially active chemical component containing at least two structural units, the first structural unit carrying an anchor group capable of covalently bonding to a coating resin and/or a cellulosic fiber material and/or a filler material matrix and the second structural unit carrying an atom, ion or molecule carrying the actual antimicrobial functionality.

3. An impregnated paper and a decorative laminate according to claim 2), wherein the antimicrobially active chemical component is chemically attached to a surface coating resin and the surface coating resin is applied as a top coat on a core impregnated paper.

4. An impregnated paper and a decorative laminate according to claim 3), wherein the antimicrobially modified resin is a melamine-formaldehyde based resin.

5. An impregnated paper and a decorative laminate according to claim 3), wherein the antimicrobially modified resin is applied as a liquid overlay onto an overlay or a decorative paper.

6. An impregnated paper and a decorative laminate according to claim 3), wherein the antimicrobially modified resin is applied as a top coat onto an overlay or a decorative paper.

7. An impregnated paper and a decorative laminate according to claim 2), wherein the antimicrobially active chemical component is chemically attached to the surface of the paper used as the top layer in a functional and/or decorative laminate.

8. An impregnated paper and a decorative laminate according to claim 7), wherein the antimicrobially modified paper is an overlay paper or a decorative paper.

9. An impregnated paper and a decorative laminate according to claim 2), wherein the antimicrobially active chemical component is chemically attached to a filler material suspended in the surface coating resin and the surface coating resin is applied as a top coat on a core impregnated paper.

10. An impregnated paper and a decorative laminate according to claim 9), wherein the antimicrobially modified filler material is cellulosic fiber.

11. An impregnated paper and a decorative laminate according to claim 9), wherein the antimicrobially modified filler material is an inorganic and/or abrasive material such as, for example, corundum, silicium carbide or titanium dioxide.

12. An impregnated paper and a decorative laminate according to claim 9), wherein the antimicrobially modified inorganic filler material prior to modification with the antimicrobial chemical component is surface treated with a silicon containing compound such as, for example, an alkoxy-silane.

13. An impregnated paper and a decorative laminate according to claims 1) - 12), wherein the antimicrobially active chemical component contains at least one heterocyclic and/or aromatic ring system.

14. An impregnated paper and a decorative laminate according to claims 1) - 12), wherein the antimicrobially active chemical component contains at least one halogen atom.

15. An impregnated paper and a decorative laminate according to claim 1) - 12), wherein the antimicrobially active chemical component contains at least one metal atom or ion.

16. A decorative laminate according to claim 1) -12), wherein the structural unit carrying the actual antimicrobial functionality of the immobilized antimicrobially active chemical component is being regenerated upon treatment of the laminate surface with a washing solution.

17. A method for manufacturing an impregnated paper and a decorative laminate, wherein an antimicrobially active component is immobilized in the surface of the paper and the laminating paper of a decorative laminate, respectively.
